# EUROPEAN PATENT SPECIFICATION

(11) **EP 1 358 793 B1**
(45) Date of publication and mention of the grant of the patent: **19.12.2007**
(21) Application number: 03077507.6
(22) Date of filing: 21.03.2001
(51) Int. Cl.: A01K 5/02, A01K 15/02, G01G 21/23, G01G 13/22, G01G 19/14

(54) **A feed metering device**
Dosiervorrichtung für Futter
Dispositif de dosage d'alimentation

(30) Priority: 10.04.2000 NL 1014895
(43) Date of publication of application: 05.11.2003
(62) Divisional of application: 01201046.8
(73) Proprietor: MAASLAND N.V., 3147 PA Maassluis (NL)
(72) Inventor: Van den Berg, Karel, 2971 BR Bleskensgraaf (NL)
(74) Representative: Corten, Maurice Jean F.M.

(56) References cited:
- WO-A-00/38506
- WO-A-95/23503
- WO-A-96/05723
- NL-C- 1 002 399

## Description

The present invention relates to a feed metering device for distributing fodder and/or drink in metered portions to an animal, according to the preamble of claim 1.

Such feed metering devices, e.g. for cows, are known from WO 96/05723.

It is one of the objectives of the present invention to provide an alternative feed metering device for distributing fodder and/or drink in metered portions to an animal, by means of which the amount of fodder and/or drink in the feed unit can be determined in a simple but reliable manner.

For that purpose, in accordance with the invention, a feed metering device of the above-described type comprises the features of the characterizing part of claim 1. Thus it is possible to determine from the degree of rotation of the roll the degree of pivotability and thus the amount of fodder and/or drink in the feed unit and thus how much fodder and/or drink is consumed by a particular animal. On the basis thereof the amount of fodder and/or drink consumed by an animal can be determined in the course of time and accordingly the health condition of an animal can be deduced. The degree of pivotability of the feed unit depends on the amount of fodder and/or drink in the feed unit. The more fodder and/or drink, the higher the degree of pivotability. The exact correlation between the degree of pivotability and the amount of fodder and/or drink can previously be determined by means of simple calibration tests.

The feed metering device according to the invention is further provided with an animal identification device for recognizing a particular animal that visits the feed unit. In this situation by an animal that visits the feed unit is meant an animal that is in a position in which it is actually able to take fodder and/or drink. Thus it is possible for the feed supplying device to supply an amount of feed to the feed unit with the aid of data from the animal identification device.

The means for weighing the fodder and/or drink present in the feed unit are preferably connected to the feed supplying unit for supplying an amount of fodder and/or drink to the feed unit with the aid of data both from the animal identification device and the weighing means.

A compact construction of the feed metering device is obtained when the device for determining the degree of pivotability of the feed unit and for deducing, from the degree as determined, the weight of the fodder and/or drink present in the feed unit, is integrated in the animal identification device.

The invention will be explained hereinafter in further detail with reference, by way of example, to the drawing in which:
Figure 1 is a first embodiment of a feed metering device according to the invention, and
Figure 2 is a second embodiment of a feed metering device according to the invention.

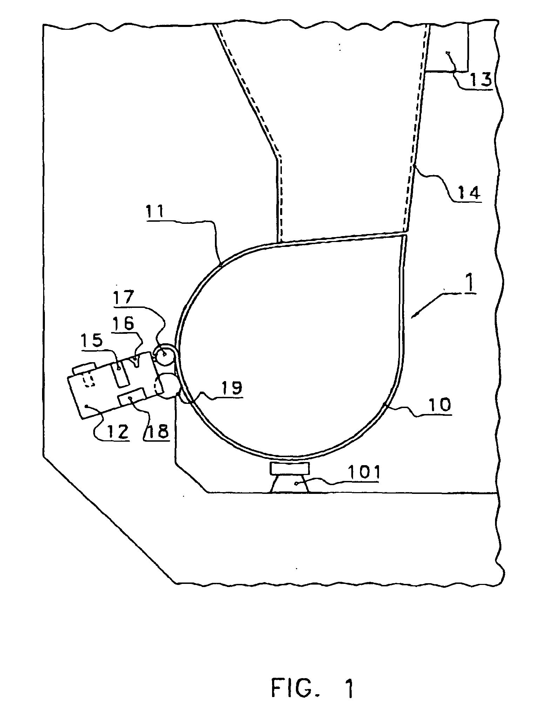

Figure 1 shows schematically a first embodiment of a feed metering device 1 according to the invention. The feed metering device 1 distributes fodder and/or drink (for the sake of simplicity hereinafter to be denoted by feed, although it will be clear that fodder and/or drink is meant), in metered portions to an animal, and is provided with a feed unit 10 for containing feed. An entrance opening 11 makes the feed unit 10 accessible to an animal, for example but not exclusively a cow. An animal identification device 12, known per se, is preferably disposed in the feed metering device 1 and recognizes a particular animal that approaches the feed unit 10 and wishes to use it. A feed supplying device 13 supplies an amount of feed to the feed unit 10, with the aid of data from the animal identification device 12, the feed of a non-shown feed stock entering the feed unit 10 via e.g. a (non-shown) valve and a chute 14.

Thus it is possible for the feed metering device 1 to recognize a particular animal, e.g. a cow, for example by means of a transponder fitted to or on the cow. The feed supplying device 13 is controlled in a manner known per se by software that ensures that the right amount of feed is distributed to the relevant cow.

According to the invention, the feed metering device may be provided with means for weighing the feed present in the feed unit. With the aid of said means it is possible to determine how much feed is consumed by a particular animal, and at the same time whether remaining feed is present in the feed unit. The means for weighing the feed present in the feed unit are preferably connected to the feed supplying device for supplying an amount of feed to the feed unit with the aid of data both from the animal identification device and the weighing means, so that the amount of feed left by the previous animal can be taken into account.

In the first embodiment of the feed metering device according to the invention, as schematically shown in Figure 1, the means for weighing the feed present in the feed unit 10 comprise a feed unit 10 which is pivotable about a hinge pin 17. The degree of pivotability is determined by the weight of the feed present in the feed unit 10. There is provided a device 18 for determining the degree of pivotability of the feed unit 10 and for deducing therefrom the weight of the feed present in the feed unit 10. The device 18 for determining the degree of pivotability of the feed unit 10 comprises a measuring roll 19 which is in contact with the feed unit. From the degree of rotation of the roll 19 the degree of pivotability and thus the amount of feed in the feed unit 10 can be determined.

Due to the fact that the device 18, 19 for determining the degree of pivotability of the feed unit 10 is integrated in the animal identification device 12, a compact construction of the feed metering device is obtained. Alternatively, the device 18, 19 may be located outside the animal identification device.

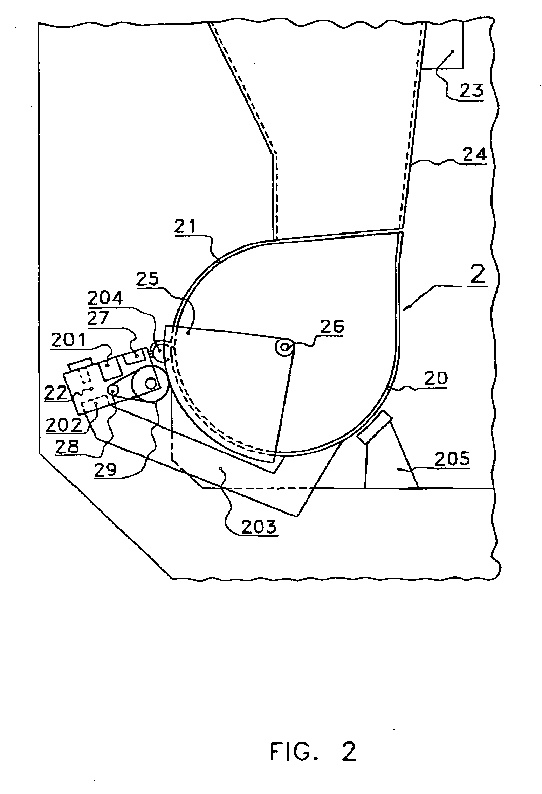

In the embodiments shown in Figures 1 and 2, even small differences in weight can be measured due to the fact that the hinge pin 17, 204 and the measuring roll 19 are located at a small distance from each other.

In order to prevent the measuring roll from being damaged in case of an undesired defect, e.g. when the animal pushes the manger downwards with force, there may be provided in both embodiments a safety supporting bracket 101 (Figure 1) respectively 205 (Figure 2) for supporting the feed unit 10; 20.

In the first embodiment shown in Figure 1, the means for deterring an animal include a loudspeaker 16 for producing an animal-frightening sound. Alternatively or additionally, the means for deterring an animal may include a lighting device 15 for emitting an animal-frightening light. In particular when a plurality of feed metering devices are disposed side by side, the use of frightening light is desirable, as this light can be directed in such a manner that its effect is limited to one particular feed metering device.

In the second embodiment shown in Figure 2 the means for deterring an animal include a closing means 25 that is movable across the entrance opening 21. When the closing means 25 is moved across the entrance opening 21, the contents of the feed unit 20 can be made inaccessible to a particular animal. In the embodiment shown the closing means 25 is constituted by a vessel-like element which is capable of rotating about an axis 26. Said axis 26 may be constituted by an axis which is driven by a motor, which motor is controlled with the aid of data from the animal identification device 22.

Additionally, there may be provided a voltage emitting device 27 for emitting an animal-frightening electric voltage to the closing means 25. Animals that undesirably approach the feed metering device 2 often make contact with the feed metering device 2. In particular they will touch the closing means 25 with their noses. By linking with the voltage emitting device 27 precisely those components of the feed metering device that are regularly touched by the animals, it is possible to deter a particular animal very locally. Thus it is also possible to use such a voltage emitting device 27 independently of a closing means. This second embodiment of a feed metering device 2 according to the invention also comprises a feed supplying device 23 and a chute 24 for the feed.

The feed metering devices described may be designed as extremely compact ones when the means for deterring an animal are integrated in the animal identification device. Alternatively, the means for deterring an animal may be constituted by separate means.

As described, in the second embodiment there is provided a simple but reliable construction due to the fact that the closing means rotates about an axis, the closing means being driven by a motor which is controlled by the animal identification device. For the purpose of providing, besides a simple but reliable construction, also a compact construction, a roll 29 is preferably driven by a motor 28, which roll 29 contacts the closing means 25.

An extremely compact construction is obtained when the motor 28 and the roll 29 are included in the relevant animal identification devices 22.

## Claims

1. A feed metering device (1, 2) for distributing fodder and/or drink in metered portions to an animal, which feed metering device (1, 2) is provided with a feed unit (10, 20) for containing fodder and/or drink, an entrance opening (11, 21) to the feed unit (10, 20), and a feed supplying device (13, 23) for supplying an amount of fodder and/or drink to the feed unit (10, 20), an animal identification device (12, 22), said feed metering device (1, 2) being provided with means for weighing the fodder and/or drink present in the feed unit (10, 20), the feed unit (10, 20) being pivotably and/or rotatably fastened to the feed metering device (1, 2) for the purpose of co-operating with the weighing means, the means for weighing the fodder and/or drink present in the feed unit comprising:
a feed unit (10, 20), which is pivotable about a hinge pin (26), the degree of pivotability being determined by the weight of the fodder and/or drink present in the feed unit (10, 20),
a device (18, 201) for determining the degree of pivotability of the feed unit (10, 20) and for deducing, from the degree as determined, the weight of the fodder and/or drink present in the feed unit (10, 20), **characterized in that** the device for determining the degree of pivotability of the feed unit and for deducing, from the degree as determined, the weight of the fodder and/or drink present in the feed unit, comprises a measuring roll (19, 29) which is in contact with the feed unit, such that from the degree of rotation of the roll the degree of pivotability and thus the amount of fodder and/or drink in the feed unit is determinable.

2. A feed metering device (1, 2) as claimed in claim 1, **characterized in that** the device (18, 201) for determining the degree of pivotability of the feed unit (10, 20) and for deducing, from the degree as determined, the weight of the fodder and/or drink present in the feed unit (10, 20), is integrated in the animal identification device (12, 22).

3. A feed metering device (1, 2) as claimed in claim 1 or 2, **characterized in that** the hinge pin (204) and the measuring roll (29) are located at a small distance from each other.

## Patentansprüche

1. Futterdosiervorrichtung (1, 2) zum Ausgeben von Futter und/oder Trinkflüssigkeit in dosierten Portionen an ein Tier, wobei die Futterdosiervorrichtung (1, 2) mit einem Futterbehälter (10, 20) zur Aufnahme von Futter und/oder Trinkflüssigkeit, mit einer Eintrittsöffnung (11, 21) zu dem Futterbehälter (10, 20), mit einer Futterzuführvorrichtung (13, 23) zum Zuführen einer Menge an Futter und/oder Trinkflüssigkeit zu dem Futterbehälter (10, 20) und mit einer Tieridentifikationsvorrichtung (12, 22) versehen ist, wobei die Futterdosiervorrichtung (1, 2) mit einer Vorrichtung zum Wiegen des in dem Futterbehälter (10, 20) befindlichen Futters und/oder der Trinkflüssigkeit versehen ist, wobei der Futterbehälter (10, 20) schwenkbar und/oder drehbar an der Futterdosiervorrichtung (1, 2) angebracht ist, um mit der Wiegevorrichtung zusammenzuwirken, wobei die Vorrichtung zum Wiegen des in dem Futterbehälter befindlichen Futters und/oder der Trinkflüssigkeit folgende Teile umfasst:
einen Futterbehälter (10, 20), der um einen Gelenkstift (26) schwenkbar ist, wobei das Maß der Schwenkbarkeit durch das Gewicht des in dem Futterbehälter (10, 20) befindlichen Futters und/oder der Trinkflüssigkeit bestimmt wird,
eine Vorrichtung (18, 201), um das Maß der Schwenkbarkeit des Futterbehälters (10, 20) zu ermitteln und von dem ermittelten Maß das Gewicht des in dem Futterbehälter (10, 20) befindlichen Futters und/oder der Trinkflüssigkeit abzuleiten,
**dadurch gekennzeichnet, dass** die Vorrichtung, um das Maß der Schwenkbarkeit des Futterbehälters zu ermitteln und von dem ermittelten Maß das Gewicht des in dem Futterbehälter befindlichen Futters und/oder der Trinkflüssigkeit abzuleiten, eine Messrolle (19, 29) umfasst, die mit dem Futterbehälter in Kontakt steht, so dass von dem Maß der Drehung der Rolle das Maß der Schwenkbarkeit und **dadurch** die Menge an Futter und/oder Trinkflüssigkeit in dem Futterbehälter ermittelt werden kann.

2. Futterdosiervorrichtung (1, 2) nach Anspruch 1, **dadurch gekennzeichnet, dass** die Vorrichtung (18, 201), um das Maß der Schwenkbarkeit des Futterbehälters (10, 20) zu ermitteln und von dem ermittelten Maß das Gewicht des in dem Futterbehälter (10, 20) befindlichen Futters und/oder der Trinkflüssigkeit abzuleiten, in die Tieridentifikationsvorrichtung (12, 22) integriert ist.

3. Futterdosiervorrichtung (1, 2) nach Anspruch 1 oder 2,
**dadurch gekennzeichnet, dass** der Gelenkstift (204) und die Messrolle (29) in geringem Abstand voneinander angeordnet sind.

## Revendications

1. Dispositif de dosage d'aliments (1, 2) destiné à la distribution de fourrage et/ou de boisson en doses à un animal, lequel dispositif de dosage d'aliments (1, 2) est doté d'une unité d'alimentation (10, 20) servant à contenir du fourrage et/ou de la boisson, d'une ouverture d'entrée (11, 21) à l'unité d'alimentation (10, 20) et d'un dispositif de distribution d'aliments (13, 23) servant à distribuer une quantité de fourrage et/ou de boisson à l'unité d'alimentation (10, 20), d'un dispositif d'identification d'animal (12, 22), ledit dispositif de dosage d'aliments (1, 2) étant doté de moyens permettant de peser le fourrage et/ou la boisson présents dans l'unité d'alimentation (10, 20), l'unité d'alimentation (10, 20) étant fixée de manière pivotante et/ou rotative au dispositif de dosage d'aliments (1, 2) afin de coopérer avec le dispositif de pesage, le dispositif de pesage du fourrage et/ou de la boisson présents dans l'unité d'alimentation comprenant :
une unité d'alimentation (10, 20), qui peut pivoter autour d'un axe d'articulation (26), le degré de pivotement étant déterminé par le poids du fourrage et/ou de la boisson présents dans l'unité d'alimentation (10, 20).
un dispositif (18, 201) permettant de déterminer le degré de pivotement de l'unité d'alimentation (10, 20) et de déduire, à partir du degré déterminé, le poids du fourrage et/ou de la boisson présents dans l'unité d'alimentation (10, 20), **caractérisé en ce que** le dispositif permettant de déterminer le degré de pivotement de l'unité d'alimentation et de déduire, à partir du degré déterminé, le poids du fourrage et/ou de la boisson présents dans l'unité d'alimentation, comprend un rouleau de mesure (19, 29) qui est en contact avec l'unité d'alimentation, de sorte qu'il est possible de déterminer le degré de pivotement et ainsi la quantité de fourrage et/ou de boisson dans l'unité d'alimentation à partir du degré de rotation du rouleau.

2. Dispositif de dosage d'aliments (1, 2) selon la revendication 1, **caractérisé en ce que** le dispositif (18, 201) permettant de déterminer le degré de pivotement de l'unité d'alimentation (10, 20) et de déduire, à partir du degré déterminé, le poids du fourrage et/ou de la boisson présents dans l'unité d'alimentation (10, 20), est intégré dans le dispositif d'identification d'animal (12, 22).

3. Dispositif de dosage d'aliments (1, 2) selon la revendication 1 ou 2, **caractérisé en ce que** l'axe d'articulation (204) et le rouleau de mesure (29) sont situés à faible distance l'un de l'autre.
